# EUROPEAN PATENT SPECIFICATION

(11) **EP 2 298 145 B1**
(45) Date of publication and mention of the grant of the patent: **12.12.2012**
(21) Application number: 10177461.0
(22) Date of filing: 17.09.2010
(51) Int. Cl.: A47J 43/07, A47J 43/06

(54) **Storage box for accessories used with food processors**
Aufbewahrungsbox für Zubehörteile zur Verwendung mit Lebensmittelverarbeitern
Boîte de rangement pour accessoires de robots ménagers

(30) Priority: 18.09.2009 US 243794 P
(43) Date of publication of application: 23.03.2011
(73) Proprietor: CONAIR CORPORATION, Stamford, CT 06902 (US)
(72) Inventor: Krasznai, Charles, Stamford, CT 06902 (US); Laskowski, Joseph, Stamford, CT 06902 (US); Kreutzner, Orent, Jill, Stamford, CT 06902 (US); Schnabel, Barbara, Stamford, CT 06902 (US); Caruso, Marie, Stamford, CT 06902 (US); Chan, Chi Tong, Stamford, CT 06902 (US)
(74) Representative: Andrews, Martyn Peter

(56) References cited:
- WO-A1-01/30222
- WO-A1-01/97667
- FR-A1- 2 815 838
- US-A- 4 733 827
- US-A1- 2004 129 809
- US-A1- 2007 108 087

## Description

### RELATED APPLICATIONS

This application is related to and claims priority from United States Provisional Application 61/243794 filed on 18 September 2009.

### BACKGROUND OF THE INVENTION

The present invention relates to food preparation appliances and, more particularly, to countertop food processor appliances.

### Description of Related Art

Countertop food processor appliances generally comprise a base, a motor housed in the base, a bowl mounted on the base for receiving food product to be mixed or chopped, a blade rotationally driven by the motor and positioned in the bowl for rotation therein, and a cover or lid for the bowl. An electrical cord extends from the base and is adapted to be plugged into an external electrical source such as a wall socket to deliver electrical energy to the motor.

Countertop food processors are usually equipped with a plurality of blades and cutting discs for different applications. Certain blades generally comprise a hub with a pair of opposed cutting blades extending therefrom in symmetrically opposite positions. Typical cutting discs comprise round discs that are flat planes and that have one or more cutting edges formed at a perforation through the plane, such as, for example, in a cheese grater. Most countertop food processors sold do not include a separate case or storage device for storing the various blades and cutting attachments. US 2004/0129809, FR2815838 and US4733827 describe storage systems for kitchen appliances for storing associated accessories.

### OBJECT OF THE PRESENT INVENTION

It is an object of the present invention to provide a storage container for cutting blades and cutting discs associated with a food processor in order to conveniently, safely and efficiently store the blades and disc while not in use.

### SUMMARY OF THE INVENTION

According to the present invention, a storage box adapted to rest on a countertop and to store blades and discs associated with a food processor comprises a body, a hinged lid attached to said body and adapted to open and close over a first hollow internal section of the body, a sliding drawer adapted to slide into and out of a second hollow internal section of the body, and a separator in the form of a raised section raised above a floor surface of the first internal section adapted to receive and hold food processor blades, wherein the separator comprises a pair of yokes for securing or storing articles therein.

### BRIEF DESCRIPTION OF THE DRAWINGS

Figure 1 is a top view of a preferred embodiment of the present invention.
Figure 2 is a side view of a preferred embodiment of the present invention.
Figure 3 is a perspective view of a preferred embodiment of the present invention shown in an opened condition.
Figure 4 is a perspective view of a preferred embodiment of the present invention shown in an closed condition.
Figure 5 is a front view of a preferred embodiment of the present invention.
Figure 6 is a partial, top view of a preferred embodiment of the present invention.

### DESCRIPTION OF THE PREFERRED EMBODIMENT OF THE PRESENT INVENTION

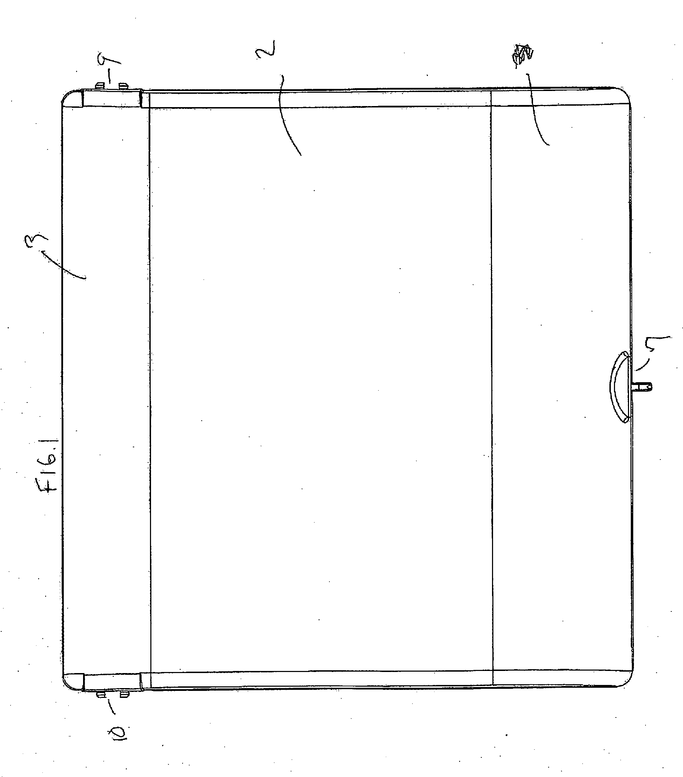

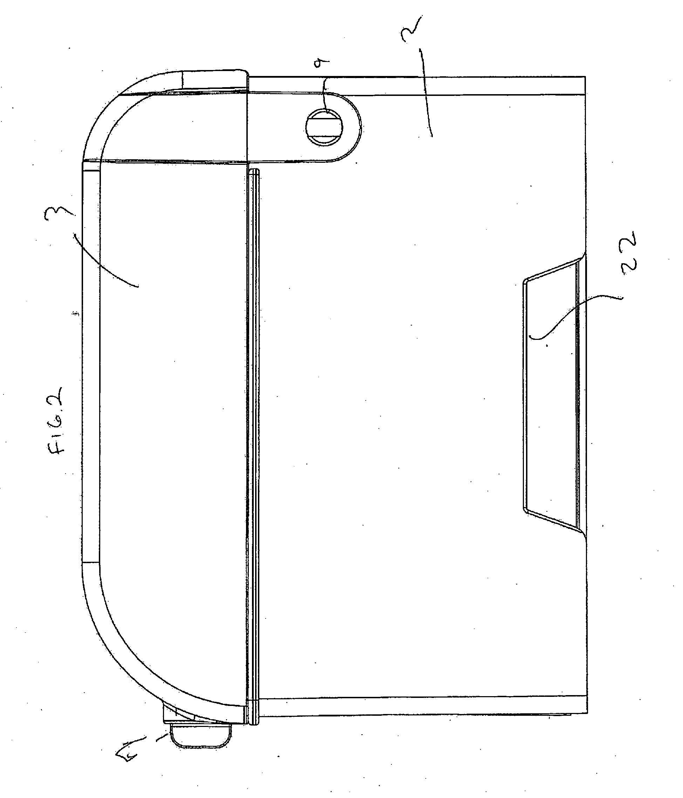

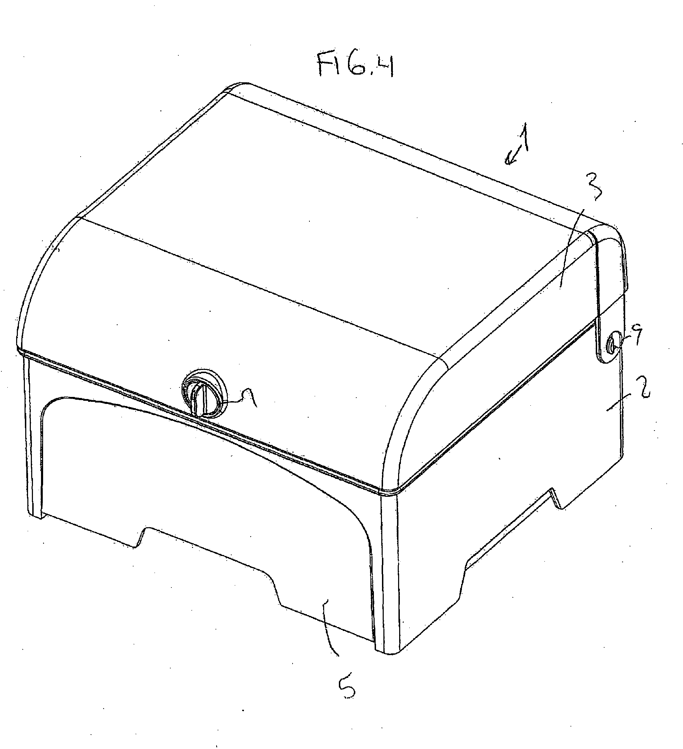

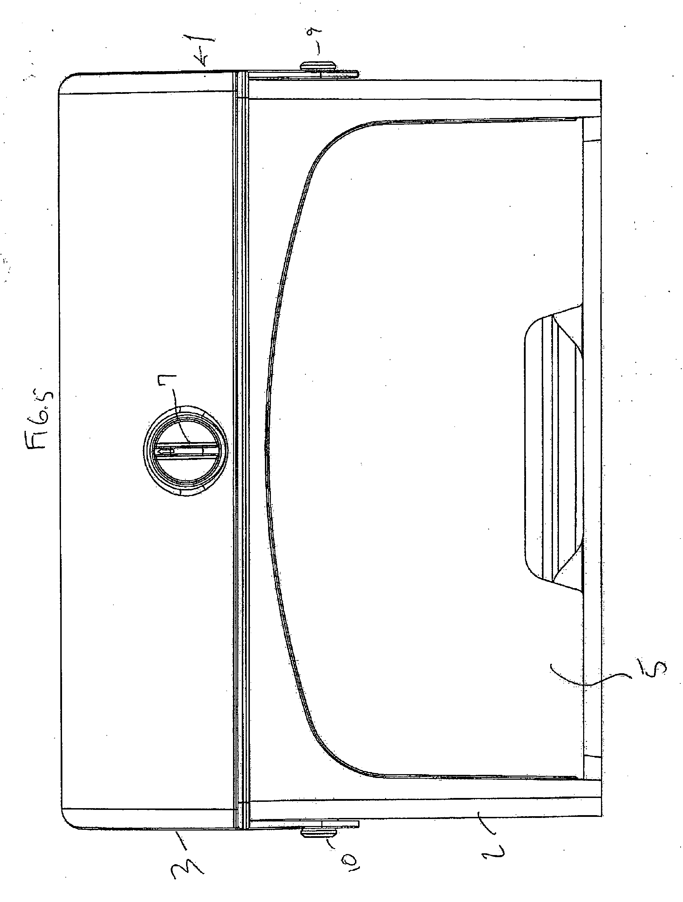

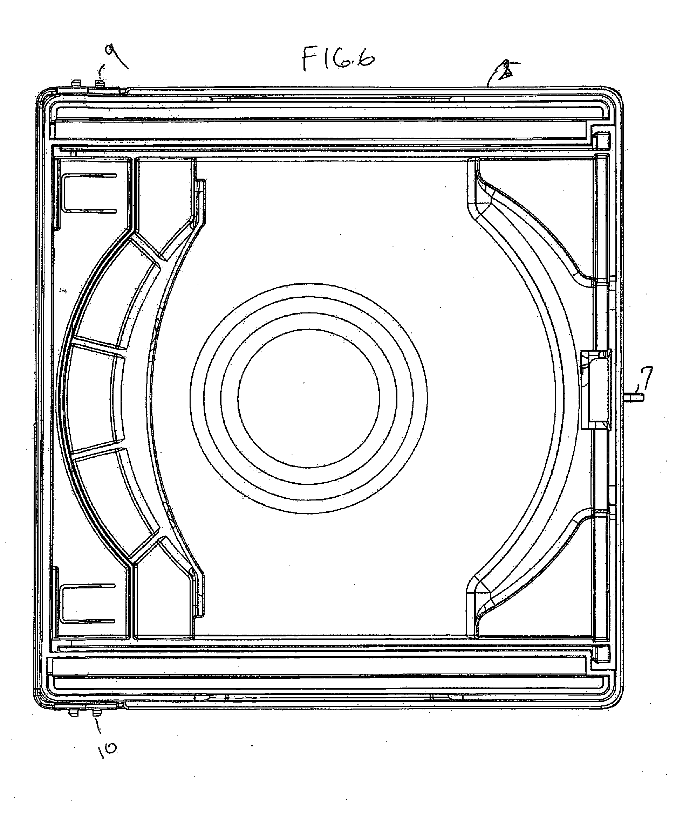

Referring to Figs. 1 - 6, a storage container 1 comprises a body 2, a hinged lid 3 attached to said body 1 and adapted to open and close over a first hollow internal section 4 of the body 1, and a sliding drawer 5 adapted to slide into and out of a second hollow internal section 6 of the body. A locking mechanism comprising a graspable knob 7 with a mating latch 8, both of a type well known to those skilled in the art, enables the lid 3 to be secured shut to prevent accidental opening and spilling of the contents of the container 1.

The lid 3 is attached to the body 1 at a first hinge 9 and a second hinge 10. The first internal section 4 includes a separator 11 in the form of a raised section raised above the floor 12 of the first internal section 4. This prevents food processor blades 13, 14, 15 stored therein, resting on the floor 12, from cutting or contacting a user's fingers or other articles stored in the container 1.

Corresponding rods 16, 17, 18 are attached to the floor 12 and are adapted to engage openings in the blades 13, 14, 15. Alternatively, for blades that do not have openings but instead have central shafts, detents or holes can be substituted for the rods to engage the shafts. The separator 11 may have a pair of yokes 19, 20 for securing or storing other articles.

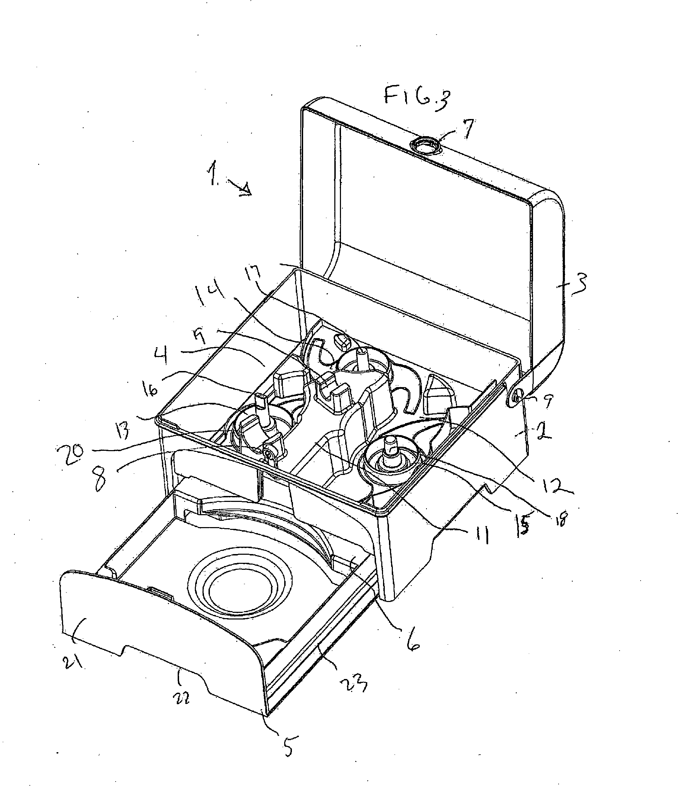

The sliding drawer 5 comprises an outer wall 21 having a recess 22 in order to provide convenient means for grasping and pulling the drawer 5. The drawer 5 includes side rails 23 adapted to slidingly engage an internal section (not shown) of the second internal section 6 in a manner known to those skilled in the art in order to complete a sliding drawer structure. The drawer 5 may include a contoured floor 24 adapted to hold various sized discs. For example, as shown in Fig 3, the floor 24 has concentrically arranged, circular stepped sections for receiving various diameter discs.

While the preferred embodiment of the present invention has been disclosed herein, it is understood that various modification can be made without departing from the scope of the presently claimed invention.

## Claims

1. A storage container (1) for cutting blades and cutting discs associated with a food processor, said container comprising
a body (2);
a first hollow internal section (4) in said body (2);
a hinged lid (3) attached to said body (2) and adapted to open and close over said first hollow internal section (4) of the body;
a second hollow internal section (6) of said body;
a sliding drawer (5) adapted to slide into and out of said second hollow internal section of the body (2); the storage container (1) being **characterized by**:
a separator (11) in the form of a raised section raised above a floor surface (12) of the first internal section (4) adapted to receive and hold food processor blades (13, 14, 15),
wherein the separator comprises a pair of yokes (19, 20) for securing or storing articles therein.

2. A storage container (1) according to Claim 1, further comprising a locking mechanism comprising a graspable knob (7) with a mating latch (8) for opening and securely closing said lid.

3. A storage container (1) according to Claim 1 further comprising a plurality of rods (16, 17, 18) attached to said floor surface (12) and adapted to engage openings in said food processor blades (13, 14, 15).

4. A storage container (1) according to Claim 1, wherein said sliding drawer (5) comprises an outer wall (21) having a recess (22) in order to provide convenient means for grasping and pulling said drawer partially out of said body.

5. A storage container (1) according to Claim 4, further comprising side rails (23) associated with said drawer (5) and adapted to slidingly engage the second internal section (6) in order to facilitate sliding of said drawer (5).

6. A storage container (1) according to Claim 5, wherein said drawer (5) has a contoured floor (24) adapted to hold various sized food processor cutting discs.

## Patentansprüche

1. Lagerbehälter (1) für Schneideklingen und Schneidescheiben, die mit einer Küchenmaschine in Zusammenhang stehen, wobei der Behälter folgendes umfasst:
einen Körper (2);
einen ersten hohlen Innenbereich (4) in dem Körper (2);
einen Klappdeckel (3), der an dem Körper (2) befestigt ist und geeignet ist, sich über dem ersten hohlen Innenbereich (4) des Körpers zu öffnen und zu schließen;
einen zweiten hohlen Innenbereich (6) des Körpers;
ein Schubfach (5), das dafür geeignet ist, in den zweiten hohlen inneren Bereich des Körpers (2) hinein und aus ihm heraus zu gleiten;
wobei der Lagerbehälter (1) durch
eine Trenneinrichtung (11) in der Form eines erhobenen Bereiches, der über einer Bodenoberfläche (12) des ersten inneren Bereiches (4) erhoben ist und geeignet ist, die Klingen (13, 14, 15) der Küchenmaschine aufzunehmen und zu halten,
gekennzeichnet ist,
wobei die Trenneinrichtung zwei Bügel (19, 20), umfasst, in welchen Gegenstände gesichert oder gelagert werden können.

2. Lagerbehälter (1) gemäß Anspruch 1, ferner umfassend einen Schließmechanismus, der einen fassbaren Knauf (7) mit einem passenden Riegel (8) zum öffnen und sicheren verschließen des Deckels umfasst.

3. Lagerbehälter (1) gemäß Anspruch 1, ferner umfassend eine Mehrzahl an Stäben (16, 17, 18), die an der Bodenoberfläche (12) angebracht sind und geeignet sind, Öffnungen in den Klingen (13, 14, 15) der Küchenmaschine zu erfassen.

4. Lagerbehälter (1) gemäß Anspruch 1, wobei das gleitende Schubfach (5) eine äußere Wand (21) umfasst, die eine Vertiefung (22) aufweist, um ein geeignetes Mittel zur Verfügung zu stellen, durch welches das Schubfach angefasst und teilweise aus dem Körper herausgezogen werden kann.

5. Lagerbehälter (1) gemäß Anspruch 4, ferner umfassend Seitenschienen (23), die mit dem Schubfach (5) in Zusammenhang stehen und geeignet sind, den zweiten inneren Bereich (6) gleitend aufzunehmen, um das Gleiten des Schubfachs (5) zu erleichtern.

6. Lagerbehälter (1) gemäß Anspruch 5, wobei das Schubfach (5) einen konturierten Boden (24) aufweist, der geeignet ist, Schneidescheiben der Küchenmaschine in verschiedenen Größen aufzunehmen.

## Revendications

1. Boîte de rangement (1) pour lames coupantes et disques coupants associés à un robot ménager, ladite boîte comprenant :
un corps (2) ;
une première section interne creuse (4) dans ledit corps (2) ;
un couvercle articulé (3) fixé audit corps (2) et susceptible de s'ouvrir et de se fermer sur ladite première section interne creuse (4) du corps ;
une seconde section interne creuse (6) dudit corps ;
un tiroir coulissant (5) qui est à même de coulisser dans ladite seconde section interne creuse du corps (2) et hors de celle-ci ; la boîte de rangement (1) étant **caractérisée par** :
un séparateur (11) sous la forme d'une section dressée au-dessus d'une surface de fond (12) de la première section interne (4) susceptible de recevoir et de conserver des lames de robot ménager (13, 14, 15),
dans laquelle le séparateur comprend une paire d'arceaux (19, 20) pour y fixer ou stocker des articles.

2. Boîte de rangement 1, selon la revendication 1, comprenant en outre un mécanisme de verrouillage comprenant un bouton de préhension (7) avec un verrou correspondant (8) pour ouvrir et fermer ledit couvercle en toute sécurité.

3. Boîte de rangement (1) selon la revendication 1, comprenant en outre une pluralité de tiges (16, 17, 18) fixées à ladite surface de fond (12) et susceptibles de s'engager dans des ouvertures desdites lames de robot ménager (13, 14, 15).

4. Boîte de rangement (1) selon la revendication 1, dans laquelle ledit tiroir coulissant (5) comprend une paroi externe (21) ayant un évidement (22) pour fournir des moyens commodes permettant de saisir et de tirer ledit tiroir partiellement hors dudit corps.

5. Boîte de rangement (1) selon la revendication 4, comprenant en outre des rails latéraux (23) associés audit tiroir (5) et susceptibles de s'engager par coulissement sur la seconde section interne (6) pour faciliter le coulissement dudit tiroir (5).

6. Boîte de rangement (1) selon la revendication 5, dans laquelle ledit tiroir (5) a un fond profilé (24) qui est à même de contenir des disques coupants de robot ménager de diverses tailles.
